# EUROPEAN PATENT APPLICATION

(11) **EP 1 110 698 A2**
(43) Date of publication of application: **27.06.2001**
(21) Application number: 00123627.2
(22) Date of filing: 30.10.2000
(51) Int. Cl.: B29C 49/42

(54) **Device and method for producing three-dimensional hollow bodies by blow-moulding**

(30) Priority: 21.12.1999 IT MI992664
(71) Applicant: Uniloy Milacron S.r.l.-S.U., 50041 Calenzano (IT)
(72) Inventor: Bertolotti, Luca, 20080 Ozzero (Milano) (IT); Machetta, Andrea, 20136 Milano (IT); Secchi, Stefano, 20081 Abbiategrasso (IT)
(74) Representative: Petruzziello, Aldo

(57) **Abstract**

A device (100) for producing three-dimensional hollow bodies by blow-moulding, comprising an extrusion group (1), consisting of an extrusion or coextrusion head (6), for producing a tubular parison (7), a manipulator (9) to position the parison (7) into a cavity (10) of a blow-mould (11), and a blowpin or needle (22) to blow the parison within the mould (11); the mould (11) can move horizontally and vertically and provides a 'book-style' opening and closure system.

## Description

The present invention refers to a device and method for producing three-dimensional hollow bodies starting from a parison extruded by a plastication/extrusion unit, and positioned into the cavity of a mould mounted on the platen of a press. Within the mould cavity the parison is blown to form the three-dimensional hollow body.

Several methods and devices to realise three-dimensional plastic articles by blow-moulding (3D-blow-moulding) are known. By means of these devices, complicated articles, which extend along three dimensions, can be realised, as for example automotive ducts, minimising scrap material (flash) and eliminating welding lines, with consequent economical advantages and better product quality.

In blow-moulding of three-dimensional bodies, one relevant drawback is presence of excessive flash due to the fact that the extruded parison has a different shape as the mould cavity; consequently, when the parison is positioned between the mould-halves and the mould is closed, a lot of scrap material remains out of the mould cavity.

The first devices for blow-moulding three-dimensional bodies, in order to remove this drawback, had the possibility to move the mould, so as to follow the mould-cavity contour during parison deposition. Other devices had the possibility to move the extrusion head to follow the shape of the mould cavity. In both devices, fast movement of heavy masses was required, with consequent problems of high cost and high cycle time.

Another device of the prior art made use of a conventional blow-moulding machine with a sectored mould closing sequentially. In this case, mould cost was excessive and the machine was not convenient in all cases in which frequent production-changes and, consequently, mould changes were needed.

Another simpler and less expensive system of the prior art makes use of vacuum aspiration for positioning the parison into the mould cavity. This system, however, can be used only for production of hollow bodies with rather simple shape, and it is not therefore versatile and suited for more technical articles.

In order to overcome these drawbacks, devices based on the use of manipulators which grab and shape the parison were developed in recent years. The most complicated devices make use of anthropomorphic robots, with six degrees of freedom, which grab the extruded parison and position it into the cavity of a mould lying horizontally. The lower mould-half is mounted on a movable carriage which, when parison positioning has terminated, moves horizontally under a press platen, on which the upper mould-half is mounted. The press closes pushing the upper part of the mould on the mould cavity and then body blowing begins.

A drawback of the device described is production cycle time too long. Indeed, between the end of parison positioning and the start of the blowing phase a certain time elapses, during which the mould moves and the press closes. This delay increases cycle time and, above all, causes inhomogeneous parison cooling, since the part of the parison in contact with the mould wall cools down more rapidly because of the greater thermal exchange; consequence are problems in the production process.

Patent application Fischer EP0893230 solves partially this drawback, by eliminating the press totally and realising the closing system of the mould cavity by means of sliding sectors. This way, as soon as the parison is positioned, the sliding sectors close the mould and blowing starts, reducing the time between parison deposition and blowing.

Patent application EP0893230 takes moreover into account the possibility to use two or more moulds which co-operate with a single plastication/extrusion unit, exploiting the difference between the actual time for parison extrusion and positioning and blowing time, which can be five or six times longer.

Patent application EP0893230 shows however some defects, due to the fact that subdividing the mould into sectors can be very complicated with articles of complex shape, and consequently very expensive. Moreover, each different body requires an apposite mould with all sector closing devices, and obviously pre-existing moulds cannot be used; therefore this system does not appear to be very versatile.

An aim of the present invention is to provide a device for producing three-dimensional hollow bodies by blow moulding which is practical, versatile, of small dimensions, cheap and simply realisable.

This aim is achieved according to the invention, with the device characteristics listed in the appended independent claim 1.

Another aim of the present invention is to provide a method for production of three-dimensional hollow bodies by blow-moulding which allows to minimise cycle time.

This aim is achieved according to the invention, with the method characteristics listed in the appended independent claim 9.

Preferred embodiments of the invention will be apparent from the dependent claims.

According to the invention, the device for producing three-dimensional hollow bodies by blow-moulding comprises at least one mould, consisting of a lower mould-half containing a cavity in which the parison is positioned, and an upper mould-half which can be closed 'book-style' over the lower mould-half, so as to create a hollow cavity in which the parison can be blown. The upper mould-half is hinged on a side of the lower mould-half. In this way, the upper mould-half can pivot around the hinge axis for closing/opening the mould cavity, moved by actuator means.

This system is very simple and fast and allows to reduce cycle time, because the parison blowing phase can start as soon as the mould has closed.

Further characteristics of the invention will be made clearer by the following detailed description, referring to a purely exemplary and non-limiting embodiment thereof, illustrated in the appended drawings, in which:
Fig. 1 is a schematic front view of the device for the production of hollow bodies according to the invention;
Fig. 2 is a top view of the device of Fig. 1;
Fig. 3 is a side view from left of the device of Fig. 1;
Fig. 4a is a side view showing schematically a mould of the device according to the invention in the closed position;
Fig. 4b is the same view as Fig. 4a, showing the mould during its opening phase;
Fig. 4c is the same view as Fig. 4a, showing the mould in the open position.

Thanks to the Figures a device indicated as a whole with reference number 100 is described, for production of three-dimensional hollow bodies according to the invention. Device 100 comprises a plastication unit or group 1 comprising two injection units 2. Each injection unit 2 includes a hopper 3, through which plastic material at the solid state is loaded. A plunger 5 pushes the plasticated material within the injection unit 2 into an extrusion head 6 from which a parison 7, which is a tubular body of plastic material, comes out.

In the figures, two injection units 2 connected to a single extrusion head 6 are shown, so as to obtain a coextruded parison; in this case the head 6 is a radial/sequential coextrusion head; however, a single injection unit or extruder or a normal continuous-extrusion or accumulator head can be employed as well.

The plastication/extrusion group 1 lies on platform 30 mounted on frame 8. On frame 8 a manipulator 9 is mounted. The manipulator 9 is able to grab the parison 7 and position it into a cavity 10 of a mould 11. The manipulator 9 is located under the extrusion head 6, and has an operating range such that it is able to grab the parison 7 and position it into the cavity 10 of the mould. To this aim manipulator 9 is a robot with a mechanical arm. The mechanical arm comprises a connecting rod 12 hinged at its extremities 13 and 14 at frame 8 and to a lever 15, respectively. The lever 15, at its free extremity, has a grabbing means 16 rotating around the axis of lever 15. In this way, rotation of connecting rod 12 around pin 13 supplies two degrees of freedom, rotation of lever 15 around pin 14 supplies other two degrees of freedom and rotation of the grabbing means 16 around the axis of lever 15 supplies two more degrees of freedom. The mechanical arrangement of the robot 9 possesses therefore six degrees of freedom.

Mould 11 comprises a lower mould-half 17, in which the cavity 10 which will contain the parison 7 is machined, and the upper mould-half 18 with a cover 19 which, positioned over the cavity 10, creates the shape of the article to be blown. The lower mould-half 17 and the upper mould-half 18 are hinged at a pin 20, so that the upper mould-half 18 can pivot around the pin 20 to close or open the cavity 10 of the lower mould-half 17 with a 'book-style' movement. This 'book-style' movement is performed by appropriate actuators 21.

In the upper mould-half 18 and/or in the lower mould-half 17 clamping means (not shown) is provided, which act when the mould 11 is completely closed. These clamping means supplies the clamping force necessary to contrast internal pressure developed by the blown parison within the mould and so avoid mould opening.

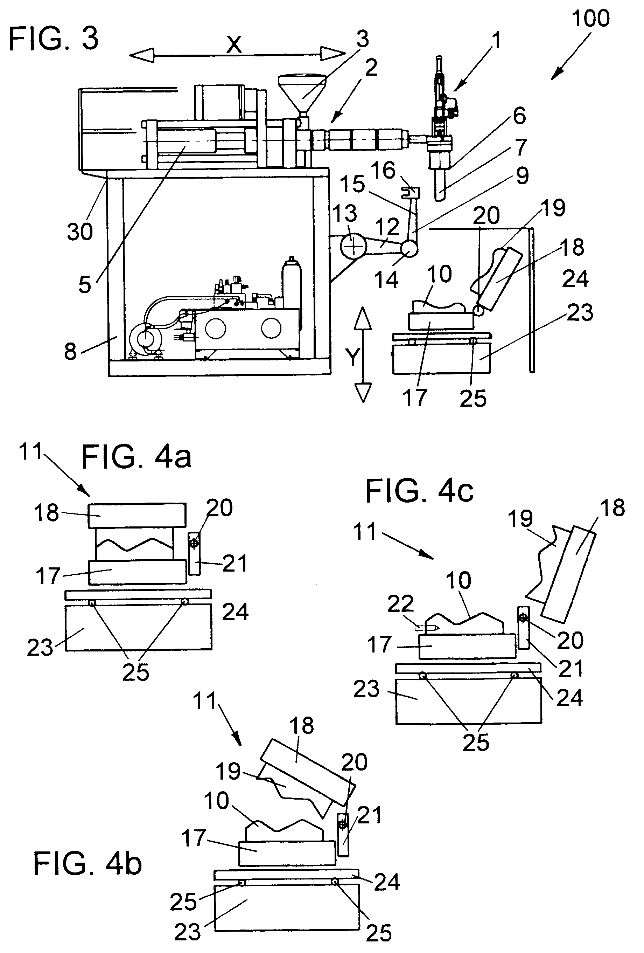

As Fig. 4c shows, in the mould 11 a blowing device is provided, comprising a blow-pin 22 getting into the cavity 10, so as to blow the parison located within. The blowing device starts blowing immediately after closure of mould 11.

The mould 11 is located under the extrusion head 6 and it is mounted on a shuttle carriage 23 which can slide on rails (not shown), so as to move forwards and backwards along a horizontal axis denoted with Z. This means that the mould 11 possesses a degree of freedom (translation along Z axis), which adds to the six degrees of freedom of the robot 9, so making parison positioning in the mould cavity 10 easier.

In the operation of parison positioning into the mould cavity 10, a further eighth degree of freedom is given by the possibility of the mould to move along a horizontal axis X (Fig. 3), orthogonal to Z axis. This can be done by mounting the lower mould-half 17 on a plate 24, which is mounted on sliding blocks 25 sliding on the shuttle carriage 23 along the X axis. In another solution, the whole plastication/extrusion group 1 can move along the X axis, by mounting it on a frame moving on sliding blocks on platform 30 supporting the plastication/extrusion group 1.

A further ninth degree of freedom can be obtained with a translation along a vertical axis Y (Fig. 3). This can be done by raising and lowering the mould 11 with appropriate actuators, for example hydraulically actuated cylinders. Otherwise platform 30, whereon the plastication group lies, can be moved vertically, by means of the known device commonly named 'bobbing'. The translation movement along the vertical Y axis allows to decrease further the time lapse from parison extrusion to its positioning into the cavity 10 of mould 11.

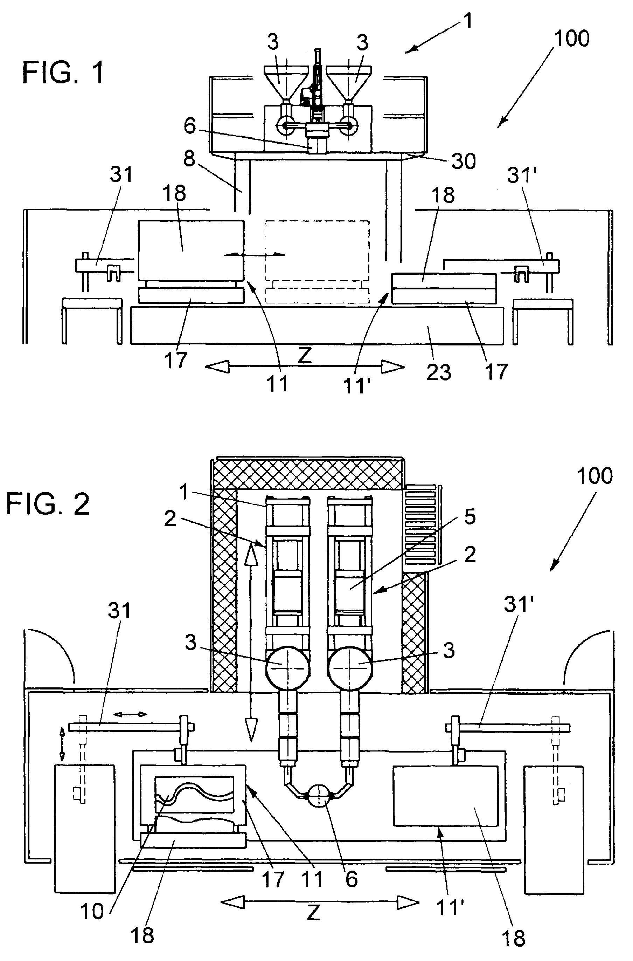

In Figs. 1 and 2 an embodiment of the invention with two moulds is shown, wherein mould 11 at left is open and mould 11' at right is closed. For clarity parts of the closed mould 11' are indicated with the same numbers of those of the open mould 11. In this case, translation along the Z axis of the shuttle carriage 23, on which the mould is mounted, has not only the function to give an additional degree of freedom to the operation of positioning the parison into the mould. The translation allows to carry the closed mould 11' away from the parison positioning zone (under extrusion head 6), while parison blowing within mould 11' is already taking place, and carry the open mould 11 in the parison positioning zone, so as to be ready to position the next parison. In this case body extraction from the mould is not performed by six freedom degree robot 9, but by dedicated devices, for example apposite manipulators 31 and 31', located on the machine frame at right and left of the extrusion head 6. Depending on the difference between time for extruding and positioning the parison and blowing time, it is possible to devise systems with one, two or even more moulds.

Although the present invention has been fully described by way of an embodiment, it is to be noted that various changes and modifications will be apparent to those skilled in the art. Providing that such changes and modifications are included in the scope of the present invention, they are covered by the protection defined in the appended claims.

## Claims

1. Device (100) for production of three-dimensional hollow bodies by blow-moulding, comprising:
- an extrusion group (1), providing an extrusion or coextrusion head (6), to produce a tubular parison (7),
- a manipulator (9), to position said parison (7) into a cavity (10) of a blow mould (11),
- a blow-pin or needle (22), to blow said parison (7) within said mould (11),
characterised in that said machine includes at least a horizontal mould (11, 11'), comprising a lower mould-half (17), in which said cavity (10) is located, and an upper mould-half (18), which has a cover (19) to close said cavity (10), said upper mould-half (18) being connected by hinge means (20) to the lower mould-half (17), so as to open and close said cavity (10) in a 'book-style'.

2. Device according to claim 1, characterised in that said hinge means (20) is mounted on a side of said lower mould-half (17).

3. Device according to claims 1 or 2, characterised in that actuator means (21), which act on said upper mould-half (18), is provided to allow its pivoting around said hinge means (20).

4. Device according to any of the preceding claims, characterised in that clamping means is pivoted to maintain said mould (11) in the closed position during the blowing phase.

5. Device according to any of the preceding claims, characterised in that said mould (11) is mounted on a shuttle carriage (23), sliding along a first horizontal axis (Z), so as to move laterally with respect to said manipulator (9).

6. Device according to claim 5, characterised in that said mould (11) is mounted on a plate (24), sliding on said carriage (23) along a second horizontal axis (X), substantially orthogonal to said first horizontal axis (Z), so as to move forwards and backwards with respect to said manipulator (9).

7. Device according to any of the preceding claims, characterised in that said mould (11) is mounted in a sliding way on a vertical axis (Y), so as to be raised or lowered with respect to said manipulator (9).

8. Mould (11) for a device (100) for production of three-dimensional hollow bodies by blow-moulding, said device comprising:
- an extrusion group (1), providing an extrusion or coextrusion head (6), to produce a tubular parison (7),
- a manipulator (9), to position said parison (7) into a cavity (10) of a blow mould (11),
- a blow-pin or needle (22), to blow said parison (7) within said mould (11),
characterised in that said mould (11) can move horizontally and possesses a 'book-style' closing system.

9. Method for production of three-dimensional hollow bodies by means of a device (100), comprising an extrusion group (1), providing an extrusion or coextrusion head (6), to produce a parison (7), a manipulator (9), to position said parison (7) into a cavity (10) of a blow mould (11), and a blow-pin or needle (22), to blow said parison (7) within said mould (11), said method comprising the following steps:
- grabbing the parison (7) coming out of the extrusion head (6) by means of said manipulator (9),
- positioning said parison into said cavity (10) of a horizontal mould (11),
- 'book-style' closure of mould (11),
- blowing of said parison within the closed mould,
- 'book-style' opening of mould (11),
- moving of the mould with respect to head (6),
- extraction of the blow-moulded three-dimensional hollow body.

10. Method according to claim 9, characterised in that said steps of 'bookstyle' opening and closure of mould (11) comprise the pivoting of an upper mould-half (18) around hinge means (20), fixed on a side of a lower mould-half (17), in which said cavity (10) is located, wherein parison (7) is positioned.
